# EUROPÄISCHE PATENTANMELDUNG

(11) **EP 2 221 564 A2**
(43) Veröffentlichungstag der Anmeldung: **25.08.2010**
(21) Anmeldenummer: 10001673.2
(22) Anmeldetag: 18.02.2010
(51) Int. Cl.: F25D 29/00

(54) **Kühl- und/oder Gefriergerät mit Energiespeicher**

(30) Priorität: 18.02.2009 DE 202009002287 U; 18.05.2009 DE 202009007114 U
(71) Anmelder: Liebherr-Hausgeräte Ochsenhausen GmbH, 88416 Ochsenhausen (DE)
(72) Erfinder: Gerner, Herbert, Dipl.-Ing. (FH), 88416 Erlenmoos (DE)
(74) Vertreter: Herrmann, Uwe

(57) **Zusammenfassung**

Die vorliegende Erfindung betrifft ein Kühl- und/oder Gefriergerät mit wenigstens einem elektrischen Verbraucher sowie mit wenigstens einem Netzteil, durch das wenigstens ein elektrischer Verbraucher mittelbar oder unmittelbar mit Energie gespeist wird, wobei das Kühl- und/oder Gefriergerät des weiteren wenigstens einen elektrischen Energiespeicher aufweist, der derart mit wenigstens einem elektrischen Verbraucher in Verbindung steht, daß er diesen/diese wenigstens zeitweise mit Energie speist.

## Beschreibung

Die vorliegende Erfindung betrifft ein Kühl- und/oder Gefriergerät mit wenigstens einem elektrischen Verbraucher sowie mit wenigstens einem Netzteil, durch das wenigstens ein elektrischer Verbraucher mittelbar oder unmittelbar mit Energie gespeist wird.

Für die Steuerung von Kühl- und/oder Gefriergeräten werden elektronische Steuerungen eingesetzt, für deren Betrieb ein entsprechendes Netzteil erforderlich ist. Durch dieses Netzteil wird die Elektronik mit Energie (Gleichspannung) versorgt, um die verschiedenen Lasten zu schalten, die Sensoren zu versorgen bzw. die Bedien- und Anzeigeelemente zu betreiben. Die Auslegung des entsprechenden Netzteils, welches sowohl extern als auch auf der Steuerung integriert sein kann, hängt im wesentlichen von der maximal erforderlichen Spitzenleistung im ungünstigsten Betriebszustand des Geräts ab. Der ungünstigste Betriebszustand stellt sich beispielsweise ein, wenn alle elektrischen Verbraucher eines Kühlschranks, wie die Kühlschrankbeleuchtung, der Kompressor, eine elektrische Türsteuerung, elektrische Anzeigeelemente, etc., im Betrieb sind und einen maximalen Leistungswert von der Energieversorgung abgreifen. Ein solcher Betriebszustand gilt in den meisten Fällen als sehr unwahrscheinlich, jedoch kann er nicht vollkommen ausgeschlossen werden und es muss deswegen sichergestellt werden, dass ein solcher Betriebszustand nicht zu einer Überlastung der Energieversorgung und zu einer daraus resultierenden Gefahrensituation führt.

Eine konventionelle Lösung des genannten Problems sieht daher den Einsatz eines größeren, stärkeren Netzteils vor, welches jedoch die maximal erforderliche Durchschnittsleistung bei weitem übersteigt und somit als nicht sonderlich kosteneffizient bezeichnet werden kann.

Weiterhin ergibt sich aus der wachsenden Anzahl von verbauten elektrischen Verbrauchern des Kühl- und/oder Gefriergeräts ein stetig wachsender Verkabelungsaufwand der elektrischen Verbraucher. So sieht eine Lösung die Verwendung von mehreren Netzteilen zur Separierung der einzelnen Verbraucher im Gerätekorpus und in der Gerätetür vor, um somit gezielt den Verkabelungsaufwand zu reduzieren.

Ein weiterer Aspekt stellt sich in der Anforderung dar, eine möglichst geringe Zeitverzögerung bei der Versorgung bestimmter elektrischer Kühlschrankkomponenten mit elektrischer Energie durch das jeweilige Netzteil zu haben. Mit einem Netzteil kann diese Zeitverzögerung nur dann vermieden werden, wenn entweder das Netzteil ständig in Standby läuft, was energetisch ungünstig ist, oder aber das Netzteil eine sehr kurze Aufstartzeit benötigt, was sich bezüglich der Netzteilkosten ungünstig auswirkt.

Der vorliegenden Erfindung liegt daher die Aufgabe zugrunde, ein Kühl- und/oder Gefriergerät der eingangs genannten Art dahingehend weiterzubilden, dass die elektrische Leistungsversorgung der elektrischen Verbraucher eines solchen Kühl-und/oder Gefriergerätes in einer möglichst kosten- und energieeffizienten Weise geschieht.

Diese Aufgabe wird durch ein Kühl- und/oder Gefriergerät mit den Merkmalen des Anspruchs 1 gelöst. Demnach ist vorgesehen, dass das Kühl- und/oder Gefriergerät des weiteren wenigstens einen elektrischen Energiespeicher aufweist, der derart mit wenigstens einem elektrischen Verbraucher in Verbindung steht, dass er diesen wenigstens zeitweise mit Energie speist. Dabei kann ein oder mehrere elektrische Verbraucher von einem oder mehreren elektrischen Energiespeichern gespeist werden. Die Versorgung von einem oder mehrerer elektrischer Verbraucher durch einen oder mehrere Energiespeicher mittels elektrischer Energie erfolgt vorzugsweise zeitweise. Dabei kann die Versorgung durch den oder die Energiespeicher von diversen Bedingungen abhängig gemacht werden. Es sei darauf hingewiesen, dass auch eine durchgehende, ununterbrochene Energiespeisung eines oder mehrerer elektrischer Verbraucher durch einen oder mehrere Energiespeicher möglich ist.

Das erfindungsgemäße Kühl- und/oder Gefriergerät kann vorteilhafterweise so ausgebildet sein, dass wenigstens ein elektrischer Energiespeicher aufladbar ist. Dies bringt beispielsweise den Vorteil mit sich, dass ein entladener Energiespeicher nicht durch den Benutzer oder Servicetechniker ausgewechselt werden muss, um eine weitere Versorgung der elektrischen Verbraucher zu gewährleisten.

Ferner ist ebenfalls denkbar, dass wenigstens ein elektrischer Energiespeicher derart mit wenigstens einem Netzteil und/oder einem die elektrischen Verbraucher versorgenden Bus- oder Versorgungssystems in Verbindung steht, dass das Netzteil und/oder das Bus- bzw. Versorgungssystem den Energiespeicher auflädt. Dadurch wird der Energiespeicher in Abhängigkeit von zu definierenden Bedingungen aufgeladen und kann ebenfalls in Abhängigkeit von zu definierenden Bedingungen mit der gespeicherten Energie einzelne oder mehrere elektrische Verbraucher zumindest zeitweise mit Energie versorgen. Das elektrische Kühl- und/oder Gefriergerät kann ein versorgendes Bussystems aufweisen. Das Bussystem ist an einem Anschluß mit dem Netzteil verbunden und verläuft auf geeignete Weise durch den Gerätekorpus und gegebenenfalls bis zur Gerätetür, wobei es mindestens einen oder mehrere Anschlüsse zur Versorgung der elektrischen Verbraucher mit über das Bussystem transportierter elektrischer Energie vorgesehen hat. Wenigstens ein elektrischer Energiespeicher wird somit entweder direkt über das Netzteil aufgeladen und/oder erhält die elektrische Ladeenergie über einen Anschluß des Bussystems.

Wenigstens ein erfindungsgemäßer elektrischer Energiespeicher kann auf der Geräteelektronik integriert sein. Es ist jedoch ebenfalls möglich, wenigstens einen elektrischen Energiespeicher extern auf einer geeigneten Geräteelektronik anzuordnen und diesen durch ein geeignetes Anschließmittel an die Geräteelektronik des Kühl- und/oder Gefriergerätes anzuschließen. Durch die erfindungsgemäße externe Anordnung des Energiespeichers wird die Wartung des Kühl- und/oder Gefriergeräts, bzw. der Austausch des Energiespeichers vereinfacht.

In bevorzugter Ausgestaltung der Erfindung umfasst wenigstens ein Energiespeicher einen Akkumulator. Der Akkumulator kann dabei als ein nach dem Stand der Technik bekannter Lithium-lonen-Akku ausgebildet sein. Ferner ist der Einsatz eines Kondensators als Energiespeicher denkbar. Insbesondere ein SuperCap oder UltraCap stellen dabei eine sinnvolle Umsetzung eines Energiespeichers dar. Diese beiden Doppelschichtkondensatoren finden häufig Anwendung als Ersatz für Akkumulatoren, wenn eine hohe Zuverlässigkeit und ein häufiges Laden und Entladen gefordert wird. Die Kondensatoren können im Vergleich zu Akkumulatoren deutlich schneller geladen werden und erhöhen somit die Verfügbarkeitszeit der Geräte.

In vorteilhafter Weise ist wenigstens ein Energiespeicher bzw. die Elektronik, welche den Energiespeicher beinhaltet, im Korpus des Gerätes angeordnet. Möglich ist jedoch auch eine Verlagerung von wenigstens einem Energiespeicher in die Tür des Kühl- und/oder Gefriergerätes. Durch die Verlagerung des Energiespeichers in die Tür können beispielsweise die in der Gerätetür angeordneten elektrischen Verbraucher mit Energie aus dem Speicher versorgt werden, wodurch eine Einsparung des Verkabelungswegs zwischen Speicher und Verbraucher erreicht wird. Beispielsweise kann auf eine aufwendige Verkabelung eines im Korpus angeordneten Energiespeichers mit in der Tür angeordneten Verbrauchern verzichtet werden.

In einer bevorzugten Ausgestaltung des erfindungsgemäßen Kühl- und/oder Gefriergeräts sind mehrere Energiespeicher im oder am Kühl- und/oder Gefriergerät verteilt angeordnet. Ein konkretes Beispiel kann hierfür sein, dass für jeden elektrischen Verbraucher des Kühl- und/oder Gefriergerätes jeweils ein elektrischer Energiespeicher eingesetzt wird und dieser mittelbar oder unmittelbar mit dem elektrischen Verbraucher selbst verbunden ist. Diese dadurch erzielte Energiepufferung einzelner Verbraucher ist dann sinnvoll, wenn die Komponenten nur unregelmäßig angesteuert werden, hohe Lastspitzen durch den Betrieb dieser Verbraucher hervorgerufen werden und wenn die räumlichen Gegebenheiten, wie z. B. der mögliche Leitungsquerschnitt zu der Komponente oder die mögliche Anzahl von Verbindungsleitungen, eine Übertragung der erforderlichen Spitzenleistung nicht zu lassen.

Eine weitere vorteilhafte Ausgestaltung des erfindungsgemäßen Kühl- und/oder Gefriergerätes ist **dadurch gekennzeichnet, dass** wenigstens ein Energiespeicher derart verschaltet ist, dass der Energiespeicher in Abhängigkeit von einer zu definierenden Versorgungsspannung aufladbar ist. Damit erfolgt die Aufladung während der Phasen, in denen überschüssige Netzteilleistung vorhanden ist. Befinden sich mehrere elektrische Verbraucher des Kühl- und/oder Gefriergerätes außer Betrieb, so kann das Netzteil bzw. Bussystem überschüssige elektrische Leistung zur Verfügung stellen, mittels der wenigstens ein elektrischer Energiespeicher aufgeladen werden kann. Ferner ist ebenfalls eine Aufladung wenigstens eines Energiespeichers in Abhängigkeit vom aktuellen Schaltzustand von wenigstens einem elektrischen Verbraucher denkbar. Ist beispielsweise ein elektrischer Energiespeicher einem bestimmten elektrischen Verbraucher zugeordnet, so kann die Aufladung des elektrischen Energiespeichers in Abhängigkeit des jeweiligen Schaltzustandes seines elektrischen Verbrauchers stattfinden. Beispielsweise kann außerhalb der Betriebszeit des elektrischen Verbrauchers die elektrische Energie vom Bussystem abgegriffen werden, um den elektrischen Energiespeicher aufzuladen.

Denkbar ist ebenfalls, daß die Aufladung von wenigstens einem Energiespeicher nur dann erfolgt, wenn die Busspannung einen bestimmten Schwellwert überschreitet. Dadurch soll eine mögliche Überlastung des Netzteils ausschließbar. Liegt die Busspannung unterhalb einer zu definierenden Busspannung bzw. unterhalb des genannten Schwellwerts, so erfolgt keine Aufladung des Energiespeichers. Dadurch wird der aktuelle Belastungszustand des Netzteils stetig erkannt und überprüft und bei Bedarf ist eine Reduzierung der Systemlast durch die Nicht-Aufladung des Energiespeichers gewährleistet. Darüber hinaus ist ein Kurzschluß der Busspannung detektierbar.

Zur Aufladung des elektrischen Energiespeichers des Kühl- und/oder Gefriergerätes kann vorgesehen sein, dass die Versorgungsspannung des Netzteils bzw. des Bussystems durch eine dem Energiespeicher vorgeschaltete Spannungsanpassung, insbesondere durch einen DC/DC-Wandler an die erforderliche Ladespannung wenigstens eines Energiespeichers anpaßbar ist. Dieser dem Fachmann bekannte selbst geführte Stromrichter wird zwischen Versorgungsspannungsanschluß und elektrischem Energiespeicher geschaltet, wodurch die anliegende Eingangsspannung am DC/DC-Wandlereingang in die erforderliche Ladespannung des elektrischen Energiespeichers gewandelt wird. Es sei darauf hingewiesen, dass jedoch auch andere geeignete Mittel zur Wandlung der entsprechenden Versorgungsspannung am Netzteil bzw. am Bussystem in die erforderliche Ladespannung möglich sind.

In vorteilhafter Weise ist wenigstens ein elektrischer Energiespeicher derart verschaltet ist, dass der Energiespeicher in Abhängigkeit von einer zu definierenden minimalen Versorgungsspannung entladbar. Ebenso kann die Entnahme der Leistung aus dem elektrischen Energiespeicher in Abhängigkeit von der Ansteuerung spezifischer Lasten erfolgen. Die Entladung eines bestimmten Energiespeichers und damit die Versorgung mit elektrischer Energie eines bestimmten elektrischen Verbrauchers beruht bei dieser Ausgestaltungsmöglichkeit der Erfindung darauf, dass der Entladungsprozeß in Abhängigkeit des Betriebszustands des elektrischen Verbrauchers durchgeführt wird. Beispielsweise ist eine Entladung des elektrischen Energiespeichers nur sinnvoll, während der Betriebszeit des elektrischen Verbrauchers.

In weiterhin vorteilhafter Weise ist ein elektrischer Energiespeicher derart im Kühl-und/oder Gefriergerät angeordnet, dass durch die Entladung dieses Energiespeichers die Netzteilleistung oder Bussystemleistung zur Versorgung von wenigstens einem elektrischen Verbraucher unterstützbar oder ersetzbar ist. Damit kann die Auslegung des erforderlichen Netzteils auf eine maximal erforderliche Durchschnittsleistung bestimmt werden, da in Zeiten maximaler Spitzenleistungen in ungünstigen Betriebszuständen das Versorgungssystem mit Hilfe der Energiespeicher unterstützt wird. Damit kann durch den Einsatz eines solchen Energiepuffers ebenfalls auf ein zusätzliches Netzteil zur Abdeckung von Spitzenlasten verzichtet werden. Ein weiterer Vorteil der gepufferten Energie ist die schnelle Verfügbarkeit dieser, was für bestimmte elektrische Verbraucher von großer Bedeutung sein kann, da ein Betrieb dieser elektrischen Verbraucher nicht zeitverzögert erfolgen darf. Möglich ist ebenfalls, dass auf die Versorgung durch das Netzteil wenigstens kurzzeitig verzichtet wird und die Versorgung der einzelnen elektrischen Verbraucher über wenigstens einen elektrischen Energiespeicher gewährleistet wird.

Um die Ausgangsspannung von wenigstens einem Energiespeicher an die erforderliche Versorgungsspannung von wenigstens einem elektrischen Verbraucher anzupassen, weist eine Ausgestaltungsmöglichkeit der Erfindung eine Spannungsanpassung am Ausgang von wenigstens einem elektrischen Energiespeicher auf. Insbesondere kann hier ein DC/DC-Wandler am Ausgang des elektrischen Energiespeichers angeordnet sein, welcher die Ausgangsspannung des elektrischen Energiespeichers in die erforderliche Versorgungsspannung von wenigstens einem elektrischen Verbraucher wandelt.

Eine mögliche Ausgestaltung der Erfindung ist **dadurch gekennzeichnet, dass** das Kühl- oder Gefriergerät eine Verschaltung vorsieht, bei der mehrere oder alle elektrischen Verbraucher durch ein Netzteil oder Bussystem versorgt sind und die gesamte Ausgangsenergie des Netzteils oder des gesamten Bussystems von wenigstens einem Energiespeicher pufferbar ist, wobei die zur Energiepufferung benötigte Elektronik und der wenigstens eine Energiespeicher eine geschlossene Einheit bilden, mit der das System optional ergänzbar ist. Durch diese Anordnung wird die Energie zur Versorgung der gesamten Elektronik gepuffert. Das Netzteil bzw. Versorgungssystem kann dadurch bei maximal erforderlichen Spitzenleistungen durch wenigsten einen Energiespeicher unterstützt werden. Die Elektronik, insbesondere Steuerungselektronik, die mit wenigstens einem elektrischen Energiespeicher derart verbunden ist, dass der Pufferungsprozeß von der genannten Steuerung gesteuert wird, bildet zusammen mit dem Energiespeicher eine geschlossene Einheit. Diese Einheit kann durch ein geeignetes Verbindungsmittel mit einem Kühl- und/der Gefriergerät verbunden werden, so dass eine Pufferung des Netzteils oder des gesamten Energieversorgungssystems erreicht werden kann.

Ferner ist es möglich, dass die Steuerung des Lade-/Entladeprozesses von wenigstens einem elektrischen Energiespeicher von einer separaten, auf der Elektronik der einzelnen elektrischen Verbraucher integrierten Steuerung steuerbar oder durch die Elektronik der einzelnen elektrischen Verbraucher selbst steuerbar ist. Ist ein einzelner elektronischer Energiespeicher so angeordnet, dass er zur Versorgung eines einzelnen elektrischen Verbrauchers mit Energie dient, so ist es sinnvoll, dass die Steuerung für den Lade- bzw. Entladevorgang des elektrischen Energiespeichers in unmittelbarer Nähe der Elektronik des einzelnen elektrischen Verbrauchers angeordnet ist. Die genannte Steuerung kann dabei eine separate Einheit bilden, jedoch ist es auch denkbar, dass die Steuerung des einzelnen elektrischen Verbrauchers die Steuerung des Lade- bzw. Entladevorgangs des elektrischen Energiespeichers übernimmt.

Bevorzugt ist die Leistungsentnahme für den Ladevorgang von wenigstens einem elektrischen Energiespeicher aus dem Netzteil bzw. Bussystem mittels einer geeigneten Vorrichtung auf einen Maximalwert begrenzbar. Durch diese Maßnahme soll sichergestellt werden, dass dem Versorgungssystem durch den Ladevorgang nicht übermäßig Leistung entzogen wird, so dass eine ausreichende Versorgung der elektrischen Verbraucher durch das Versorgungssystem nicht mehr gewährleistet werden kann.

In einer möglichen Ausgestaltungsform der Erfindung umfasst das Kühl- und/oder Gefriergerät eine Steuerelektronik für eine elektrische Türöffnung. Für den Antrieb einer elektronischen Türöffnung bei Kühl- und/oder Gefriergeräten ist eine Leistung erforderlich, welche die üblicherweise vorhandene Leistung der Geräteelektronik deutlich übersteigt. Der Leistungsbedarf ist außerdem abhängig von aktuellen Türwinkeln sowie der gewünschten Türöffnungsgeschwindigkeit. Durch den Einsatz von Energiespeichern können Spitzenlasten sehr schnell kompensiert werden. Im Fall der Türöffnung wird für die erste Phase der Türöffnung die meiste Energie benötigt, da hier die Magnetkraft der Türdichtung, gegebenenfalls Vakuumkräfte überwunden werden müssen und in der Folge die Tür zunächst beschleunigt werden muss. Es ist denkbar, dass die für den Betrieb des Motors erforderliche Energie ganz oder teilweise aus wenigstens einem Energiespeicher beziehbar ist. Ebenfalls ist es denkbar, dass die für den Betrieb einer eventuell vorhandenen elektromagnetischen Kupplung erforderliche Energie, sowie für den Betrieb eines eventuell vorhandenen zusätzlichen elektrischen Antriebs zur Überwindung der Vakuumkraft die erforderliche Energie ganz oder teilweise aus wenigstens einem Energiespeicher beziehbar ist.

In weiterhin vorteilhafterweise umfasst das Kühl- und/oder Gefriergerät eine LED-Beleuchtung, wobei die für den Betrieb einer Beleuchtung erforderliche Energie ganz oder teilweise aus wenigstens einem Energiespeicher beziehbar ist.

In einem weiteren Beispiel ist es denkbar, dass die für den Betrieb eines Eiswürfelbereiters erforderliche Energie ganz oder teilweise aus wenigstens einem Energiespeicher beziehbar ist.

In einer weiteren alternativen Ausgestaltungsmöglichkeit der Erfindung ist wenigstens ein elektrischer Energiespeicher derart verschaltet, daß der Energiespeicher in Abhängigkeit von einem anliegenden logischen Signal aufladbar bzw. der Aufladvorgang des Energiespeichers abbrechbar ist. Insbesondere ist das logische Signal über das Bussystem übermittelbar. Beispielsweise ist der Energiespeicher nur aufladbar, wenn das Siganal vorhanden ist. Bei einem Siganlübergang wird der Aufladeprozess sofort oder verzögert gestoppt. Durch wird gewährleistet, daß die Aufladung des Energiespeichers zu keiner Überlastung des Netzteils führt.

Ebenfalls erweist sich als vorteilhaft, wenn wenigstens ein elektrischer Energiespeicher derart verschaltet ist, daß der Energiespeicher in Abhängigkeit von einem anliegenden logischen Signal entladbar bzw. der Entladevorgang des Energiespeichers abbrechbar ist. Für den Fall, daß das System aktuell aus dem Energiespiecher versorgt wird und somit die Busspannung aufrecht erhält, muß gewährleistet werden, daß die Entladung des Energiespeichers gestoppt wird, sobald die Versorgung aus dem Netzteil nicht mehr vorhanden ist, da sich sonst der Energiespeicher vollständig entlädt. Als entsprechendes logisches Signal ist insbesondere das Takt-Signal des Bussystems verwendbar. Dieses Signal ist nur dann vorhanden, wenn das Leistungsteil vom Netz versorgt wird.

Somit ist es beispielsweise möglich, dass die Aufladung nur dann erfolgt, wenn die Busspannung einen bestimmten Schwellenwert überschreitet und/oder nur dann, wenn ein logisches Signal anliegt. Dieses könnte auch über das Bussystem übermittelt werden. Als Hintergrund ist zu nennen, dass die Aufladung des Energiespeichers zu keiner Überlastung des Netzteils führen darf bzw. sollte.

Weiterhin ist es beispielsweise denkbar, dass unterhalb einer zu definierenden Busspannung keine Aufladung des Energiespeichers erfolgt. Der Hintergrund ist, dass der Belastungszustand des Netzteils erkannt und damit die Systemlast reduziert werden kann sowie die Erkennung eines Kurzschlusses in der Busspannung. Auch ist es in einer Ausführungsform denkbar, dass die Entladung des Energiespeichers durch ein logisches Signal gestoppt werden kann bzw. die Entladung nur möglich ist, wenn ein logisches Signal ansteht. Für den Fall, dass das System akutell aus dem Energiespeicher versorgt wird und somit die Busspannung aufrecht erhält, sollte gewährleistet werden, dass die Entladung des Energiespeichers gestoppt wird, sobald die Versorgung aus dem Netzteil nicht mehr vorhanden ist da sich ansonsten der Energiespeicher vollständig entlädt. Als entsprechendes logisches Signal könnte das Takt-Signal des Busssystems verwendet werden. Dieses Singal ist nur vorhanden, wenn das Leistungsteil vom Netz versorgt wird.

Die vorliegende Erfindung wird nun anhand von Ausführungsbeispielen näher erläutert.

In einem ersten Ausführungsbeispiel des erfindungsgemäßen Kühl- und/oder Gefriergerätes wird eine Variante vorgestellt, die die Energiepufferung des gesamten Versorgungssystems der Geräteelektronik vorschlägt.

Das Kühl- und/oder Gefriergerät weist dabei einen Korpus auf sowie eine oder zwei Türen, mittels derer der von dem Korpus umgebene Kühl- bzw. Gefrierraum verschließbar ist. Die Geräteelektronik des Kühl- und/oder Gefriergerätes umfasst eine LED-Beleuchtung zur Ausleuchtung des Kühl- bzw. Gefrierraums. Ebenfalls kann optional eine LED-Beleuchtung in der Tür des Kühl- und/oder Gefriergerätes angeordnet sein. Des weiteren umfasst die Geräteelektronik einen Eiswürfelbereiter der ebenfalls in einer der Türen des Kühl- und/oder Gefriergerätes angeordnet ist. Für den Antrieb einer elektrischen Türöffnung ist weiterhin eine dafür geeignete Elektronik in der Tür des Kühl- bzw. Gefriergerätes angeordnet. Die Geräteelektronik für die elektrische Türöffnung wird dabei aus einem elektrischen Motor zur Öffnung der Kühlschranktür, einer Kupplung, sowie jeweils einem Sensor für einen Türauslöser und zur Messung des Öffnungswinkels der Tür, gebildet. Die Sensoren zur Messung des Öffnungswinkels der Tür können dabei auch am Gerätekorpus selbst angebracht sein. Die elektrische Türsteuerung kann eventuell durch ein weiteres Bedienteil ergänzt werden, um eine erweiterte manuelle Türsteuerung zu ermöglichen.

Zur Versorgung der gesamten Geräteelektronik wird ein entsprechendes dimensioniertes Leistungsnetzteil im Gerätekorpus installiert, wobei auch auf ein externes Leistungsnetzteil zurückgegriffen werden kann.

Zur Versorgung der gesamten Geräteelektronik des Kühl- und/oder Gefriergerätes dient ein Energiebussystem, welches die Aufgabe der Leistungszuführung vom Leistungsnetzteil zu der jeweiligen Geräteelektronik übernimmt. Für das genannte Ausführungsbeispiel umfasst das Bussystem eine mehradrige Energiezuführungsleitung. Durch das Leistungsnetzteil wird die Elektronik mit Energie (Gleichspannung) versorgt, um die verschiedenen Lasten zu schalten, die Sensoren zu versorgen bzw. die Bedien- und Anzeigeelemente zu betreiben. Durch den Einsatz eines Akkumulators als Energiespeicher in Verbindung mit einer elektronischen Steuerung kann die Auslegung des Leistungsnetzteils auf eine maximal erforderliche Durchschnittsleistung erfolgen und somit kosteneffizienter ausgeführt werden. Der Akkumulator wird dabei in geeigneter Weise zwischen dem Leistungsteil und der Geräteelektronik verschaltet. Dadurch wird die gesamte abgegebene Energie vom Leistungsnetzteil durch den Akkumulator gepuffert und an die Geräteelektronik weitergegeben. Zur Wandlung der abgegebenen Energie (Gleichspannung des Leistungsnetzteils) wird ein DC/DC-Wandler eingesetzt, der die Spannung in die benötigte Ladungsspannung des Akkumulators wandelt. Der Akkumulator ist an seinem Ausgang ebenfalls über einen DC/DC-Wandler mit der Geräteelektronik derartig verschaltet, dass die Ausgangsspannung des Akkumulators in die jeweilige erforderliche Versorgungsspannung der Geräteelektronik gewandelt wird. Zu beachten ist dabei jedoch, dass die genannte Verschaltung von Leistungsnetzteil, Akkumulator und Geräteelektronik eine Versorgung der Geräteelektronik mit Energie auch in einem entladenen Zustand des Akkumulators gewährleistet. Liegt ein ungünstiger Betriebszustand des Kühl- und/oder Gefriergeräts vor, das heißt die Gesamtlast der Geräteelektronik, welche Energie vom Versorgungssystem abgreift, ist sehr hoch und die benötigte Energie überlastet das Leistungsnetzteil, so wird durch eine elektrische Steuerung der Akkumulator entladen und zusätzliche Energie in das Bussystem zur Versorgung der Elektronik, das heißt der elektrischen Verbraucher wie LED-Beleuchtung, Eiswürfelzubereiter und elektrische Türöffnung, eingespeist. Die genannte elektrische Steuerung des Akkumulators übernimmt dabei die Steuerung der Entlade- bzw. Aufladeprozesse des Akkumulators. Die elektronische Steuereinheit und der Akkumulator bilden eine geschlossene Einheit (Modul) zur Energiepufferung, mit welcher das System durch ein geeignetes Verbindungsmittel ergänzt werden kann. Die elektronische Steuerung des Akkumulators regelt dabei die Aufladung des Akkumulators derartig, dass diese von einer zu definierenden Versorgungsspannung des Leistungsnetzteils oder vom aktuellen Schaltzustand der elektrischen Verbraucher abhängt. Ebenfalls kann zur Entladung des Akkumulators eine minimale Versorgungsspannung definiert werden, sowie ein aktueller Schaltzustand der elektrischen Verbraucher, in dessen Abhängigkeit ein Entladungsvorgang des Akkumulators ausgeführt wird.

In einem weiteren Ausführungsbeispiel des erfindungsgemäßen Kühl- und/oder Gefriergeräts soll nunmehr nicht das gesamte Versorgungssystem energiegepuffert werden, sondern die Energiepufferung soll sich auf einzelne elektrische Verbraucher konzentrieren. Das Kühl- und/oder Gefriergerät umfasst dabei wie im ersten Ausführungsbeispiel einen Gerätekorpus und ein bis zwei Gerätetüren. Die Geräteelektronik des Kühl- und/oder Gefriergeräts besteht aus einer elektrischen Türsteuerung, welche einen Motor, eine Kupplung und eine Sensorik zur Türauslösung und zur Bestimmung des Öffnungswinkels der Tür aufweist, eine LED-Beleuchtung zur Beleuchtung des Kühl- und/oder Gefrierinnenraums bzw. der Tür und eine Eiswürfelzubereitung.

Für den Antrieb einer elektrischen Türöffnung bei Kühl- und/oder Gefriergeräten ist eine Leistung erforderlich, welche die üblicherweise vorhandene Leistung der Geräteelektronik deutlich übersteigt. Der Leistungsbedarf ist außerdem abhängig vom aktuellen Türwinkel sowie der gewünschten Türöffnungsgeschwindigkeit. Durch den Einsatz von Energiespeichern können Spitzenlasten sehr schnell kompensiert werden. Im Falle der Türöffnung wird für die erste Phase der Türöffnung die meiste Energie benötigt, da hier die Magnetkraft der Türdichtung gegebenenfalls Vakuumkräfte überwunden werden müssen und in der Folge die Tür zunächst beschleunigt werden muss. Aus diesem Grund ist in unmittelbarer Nähe der Elektronik der Türöffnung ein Akkumulator angeordnet, der bei Betätigung der elektronischen Türöffnung durch Entladung unterstützend zur vorhandenen Netzteilleistung Energie in die elektronische Türöffnung speist. Das Kühl- und/oder Gefriergerät beinhaltet ein Leistungsnetzteil, das über ein mehradriges Bussystem mit sämtlichen elektrischen Verbrauchern des Gerätes verbunden ist. Im speziellen Fall der elektrischen Türöffnung wird ein vieradriges Bussystem vom Leistungsnetzteil vom Gerätekorpus über eine Türdurchführung zur Tür des Geräts geführt. Das vieradrige Bussystem wird derart mit der Elektronik der elektrischen Türöffnung und dem Akkumulator verschaltet, dass die elektrische Türöffnung zumindest zeitweise ganz oder teilweise von dem Akkumulator mit Energie gespeist wird. Das heißt die Elektronik der elektrischen Türsteuerung kann entweder ausschließlich von dem Akkumulator mit Energie versorgt werden, jedoch kann durch die Entladung des Akkumulators auch eine unterstützende Wirkung zur vorhandenen Netzteilleistung erzielt werden. Durch die Verschaltung des Akkumulators mit dem vieradrigen Bussystem erfolgt die Aufladung des Akkumulators während der Zeit, in der die elektrische Türsteuerung nicht in Betrieb ist. Die Steuerung des jeweiligen Auflade- bzw. Entladevorgangs des Akkumulators wird von der Elektronik der elektrischen Türsteuerung vollständig übernommen. Der Akkumulator ist an seinem Ein- bzw. Ausgang jeweils mit einem DC/DC-Wandler verschaltet, wodurch am Eingang die Eingangsspannung in die erforderliche Ladespannung gewandelt und am Ausgang die Ausgangsspannung in die erforderliche Versorgungsspannung der elektrischen Türsteuerung gewandelt wird.

Durch die Pufferung von Energie kann der Einsatz eines zusätzlichen Netzteils zur Versorgung der elektrischen Türsteuerung vermieden werden. Das zusätzliche Netzteil wäre erforderlich, um die für den Türantrieb erforderliche Leistung, welche die von dem Leistungsnetzteil bereitstellbare Leistung um das doppelte übersteigt, bereitzustellen. Ein Weiterer Vorteil der gepufferten Energie ist die schnelle Verfügbarkeit der Energie. Dies ist für den elektrischen Türantrieb von großer Bedeutung, da der Öffnungsvorgang nicht zeitverzögert erfolgen darf. Mit einem Netzteil kann diese Zeitverzögerung nur dann vermieden werden, wenn entweder das Netzteil ständig im Standby läuft, was energetisch ungünstig ist, oder aber das Netzteil eine sehr kurze Aufstartzeit benötigt, was sich bezüglich der Netzteilkosten ungünstig auswirkt.

## Patentansprüche

1. Kühl- und/oder Gefriergerät mit wenigstens einem elektrischen Verbraucher sowie mit wenigstens einem Netzteil, durch das wenigstens ein elektrischer Verbraucher mittelbar oder unmittelbar mit Energie gespeist wird,
**dadurch gekennzeichnet,**
**daß** das Kühl- und/oder Gefriergerät des weiteren wenigstens einen elektrischen Energiespeicher aufweist, der derart mit wenigstens einem elektrischen Verbraucher in Verbindung steht, daß er diesen/diese wenigstens zeitweise mit Energie speist.

2. Kühl- und/oder Gefriergerät gemäß Anspruch 1, **dadurch gekennzeichnet, daß** der wenigstens eine elektrische Energiespeicher aufladbar ist, wobei vorzugsweise vorgesehen ist, dass der wenigstens eine elektrische Energiespeicher derartig mit wenigstens einem Netzteil und/oder einem die elektrischen Verbraucher versorgenden Bussystem/Versorgungssystem in Verbindung steht, daß das Netzteil und/oder das Bussystem/Versorgungssystem den Energiespeicher auflädt.

3. Kühl- und/oder Gefriergerät gemäß einem der vorhergehenden Ansprüche, **dadurch gekennzeichnet, daß** der wenigstens eine elektrische Energiespeicher auf der Geräteelektronik integriert ist oder extern angeordnet und an die Geräteelektronik anschließbar ist und/oder dass der wenigstens eine elektrische Energiespeicher einen Akkumulator, insbesondere einen Lithium-lonen-Akku, oder einen Kondensator, insbesondere einen SuperCap oder UltraCap, umfaßt.

4. Kühl- und/oder Gefriergerät gemäß einem der vorhergehenden Ansprüche, **dadurch gekennzeichnet, daß** der wenigstens eine elektrische Energiespeicher bzw. die Elektronik, welche den elektrischen Energiespeicher beinhaltet, im Korpus des Gerätes oder in der Tür des Kühl- und/oder Gefriergerätes angeordnet ist und/oder dass mehrere elektrische Energiespeicher im oder am Kühl- und/oder Gefriergerät verteilt angeordnet sind.

5. Kühl- und/oder Gefriergerät gemäß einem der vorhergehenden Ansprüche, **dadurch gekennzeichnet, daß** wenigstens ein Energiespeicher derart verschaltet ist, daß der Energiespeicher in Abhängigkeit von einer zu definierenden Versorgungsspannung oder/und von einem zu definierenden Schwellwert der Busspannung oder/und vom aktuellen Schaltzustand von wenigstens einem elektrischen Verbraucher aufladbar ist.

6. Kühl- und/oder Gefriergerät gemäß einem der vorhergehenden Ansprüche, **dadurch gekennzeichnet, daß** die Versorgungsspannung des Netzteils durch eine dem Energiespeicher vorangeschaltete Spannungsanpassung, insbesondere durch einen DC/DC-Wandler an die erforderliche Ladespannung des wenigstens einen Energiespeichers anpaßbar ist und/oder dass der wenigstens eine elektrische Energiespeicher derart verschaltet ist, daß der Energiespeicher in Abhängigkeit von einer zu definierenden minimalen Versorgungsspannung oder vom aktuellen Schaltzustand von wenigstens einem bestimmten elektrischen Verbraucher entladbar ist.

7. Kühl- und/oder Gefriergerät gemäß einem der vorhergehenden Ansprüche, **dadurch gekennzeichnet, daß** der wenigstens eine elektrische Energiespeicher derart angeordnet ist, daß durch die Entladung dieses Energiespeichers die Netzteilleistung oder Bussystemleistung zur Versorgung von wenigstens einem elektrischen Verbraucher unterstützbar oder ersetzbar ist und/oder dass die Ausgangsspannung des wenigstens einen elektrischen Energiespeichers durch eine dem Energiespeicher nachgeschaltete Spannungsanpassung, insbesondere durch einen DC/DC-Wandler an die erforderliche Versorgungsspannung von wenigstens einem elektrischen Verbraucher anpaßbar ist.

8. Kühl- und/oder Gefriergerät gemäß einem der vorhergehenden Ansprüche, **dadurch gekennzeichnet, daß** das Kühl- und/oder Gefriergerät eine Verschaltung vorsieht, bei der einer, mehrere oder alle elektrischen Verbraucher durch ein Netzteil oder Bussystem versorgt sind und die gesamte Ausgangsenergie des Netzteils oder das gesamte Bussystem von dem wenigstens einen Energiespeicher pufferbar ist, wobei die zur Energiepufferung benötigte Elektronik und der wenigstens eine Energiespeicher eine geschlossenen Einheit bilden, mit der das System optional ergänzbar ist.

9. Kühl- und/oder Gefriergerät gemäß einem der vorhergehenden Ansprüche, **dadurch gekennzeichnet, daß** die Steuerung der Lade/Entladevorgänge des wenigstens einen elektrischen Energiespeichers von einer separaten auf der Elektronik der einzelnen elektrischen Verbraucher integrierten Steuerung steuerbar oder durch die Elektronik der einzelnen elektrischen Verbraucher selbst steuerbar ist.

10. Kühl- und/oder Gefriergerät gemäß einem der Ansprüche 2 bis 9 **dadurch gekennzeichnet, daß** die Leistungsentnahme für den Ladevorgang des wenigstens einen elektrischen Energiespeichers aus dem Netzteil/Bussystem auf einen Maximalwert begrenzbar ist.

11. Kühl- und/oder Gefriergerät nach einem der vorhergehenden Ansprüche, **dadurch gekennzeichnet, daß** eine Steuerelektronik für eine elektrische Türöffnung vorgesehen ist, und daß die für den Betrieb des Motors erforderliche Energie, welche für den Antrieb der Türöffnung erforderlich ist, ganz oder teilweise aus dem wenigstens einen Energiespeicher beziehbar ist.

12. Kühl- und/oder Gefriergerät nach einem der vorhergehenden Ansprüche, **dadurch gekennzeichnet, daß** eine Steuerelektronik für eine elektrische Türöffnung vorgesehen ist, und daß die für den Betrieb einer elektromagnetischen Kupplung erforderliche Energie ganz oder teilweise aus dem wenigstens einen Energiespeicher beziehbar ist und/oder dass eine Steuerelektronik für eine elektrische Türöffnung vorgesehen ist, und daß die für den Betrieb eines zusätzlichen Antriebs zur Überwindung der Vakuumkraft erforderliche Energie ganz oder teilweise aus dem wenigstens einen Energiespeicher beziehbar ist.

13. Kühl- und/oder Gefriergerät nach einem der vorhergehenden Ansprüche, **dadurch gekennzeichnet, daß** eine LED-Beleuchtung vorgesehen ist und daß die für den Betrieb der Leuchtung erforderliche Energie ganz oder teilweise aus dem wenigstens einen Energiespeicher beziehbar ist.

14. Kühl- und/oder Gefriergerät nach einem der vorhergehenden Ansprüche, **dadurch gekennzeichnet, daß** ein Eiswürfelbereiter vorgesehen ist und daß die für den Betrieb des Eiswürfelbereiters erforderliche Energie ganz oder teilweise aus dem wenigstens einen Energiespeicher beziehbar ist.

15. Kühl- und/oder Gefriergerät gemäß einem der vorhergehenden Ansprüche, **dadurch gekennzeichnet, daß** der wenigstens eine elektrische Energiespeicher derart verschaltet ist, daß der Energiespeicher in Abhängigkeit von einem anliegenden, insbesondere über das Bussystem übertragenen, logischen Signal) aufladbar bzw. der Aufladvorgang des Energiespeichers abbrechbar ist und/oder dass der wenigstens eine elektrische Energiespeicher derart verschaltet ist, daß der Energiespeicher in Abhängigkeit von einem anliegenden, insbesondere über das Bussystem übertragenen, logischen Signal entladbar bzw. der Entladevorgang des Energiespeichers abbrechbar ist.
